# NOUVEAU FASCICULE DE BREVET EUROPEEN

(11) **EP 2 099 943 B2**
(45) Date de publication et mention de la décision concernant l'opposition: **08.01.2020**
(45) Mention de la délivrance du brevet: 12.07.2017
(21) Numéro de dépôt: 07870314.7
(22) Date de dépôt: 21.11.2007
(51) Int. Cl.: C22C 16/00

(54) **ALLIAGE DE ZIRCONIUM RESISTANT A LA CORROSION EN OMBRES PORTEES POUR COMPOSANT D'ASSEMBLAGE DE COMBUSTIBLE POUR REACTEUR A EAU BOUILLANTE, COMPOSANT REALISE EN CET ALLIAGE, ASSEMBLAGE DE COMBUSTIBLE ET SON UTILISATION**
GEGENÜBER KORROSION IN FALLENDEM SCHATTEN BESTÄNDIGE ZIRKONIUMLEGIERUNG FÜR EINE BRENNELEMENTKOMPONENTE EINES SIEDEWASSERREAKTORS, MIT DIESER LEGIERUNG HERGESTELLTE KOMPONENTE, BRENNELEMENT UND SEINE VERWENDUNG
ZIRCONIUM ALLOY RESISTANT TO CORROSION IN DROP SHADOWS FOR A FUEL ASSEMBLY COMPONENT FOR A BOILING WATER REACTOR, COMPONENT PRODUCED USING SAID ALLOY, FUEL ASSEMBLY, AND USE OF SAME

(30) Priorité: 01.12.2006 FR 0610546
(43) Date de publication de la demande: 16.09.2009
(73) Titulaire: AREVA NP, 92400 Courbevoie (FR)
(72) Inventeur: BARBERIS, Pierre, 73400 Ugine (FR); REBEYROLLE, Véronique, 74410, DUINGT (FR); HOFFMANN, Petra-Britt, 91227 Leinburg (DE); VERMOYAL, Jean-Jérôme, 69380 Chasselay (FR)
(74) Mandataire: Lavoix
(86) Numéro de dépôt international: PCT/FR2007/001910
(87) Numéro de publication internationale: WO 2008/071862

(56) Documents cités:
- EP-A- 1 308 966
- EP-A1- 0 446 924
- EP-A1- 1 225 243
- US-A- 3 963 534
- US-A- 5 560 790
- US-A- 5 832 050
- US-A- 5 985 211
- US-B1- 6 261 516
- US-B1- 6 325 966
- US-B1- 6 340 536

## Description

L'invention concerne le domaine des réacteurs nucléaires, et plus précisément les éléments en alliage de zirconium qui sont utilisés pour composer les assemblages de combustible pour réacteurs nucléaires du type à eau bouillante (REB).

Les alliages de Zr sont largement utilisés dans les assemblages de combustible pour réacteurs nucléaires pour constituer des pièces soumises à de sévères conditions d'irradiation, de sollicitations mécaniques et de corrosion. Parmi ces pièces on peut citer les gaines contenant les pastilles de combustible, les boîtiers, les grilles et éléments d'espacement divers...

Différentes catégories d'alliages de Zr ont été développées, correspondant aux différents besoins des utilisateurs en fonction des propriétés recherchées pour les différences pièces. Celles-ci dépendent des sollicitations physico-chimiques (irradiation, corrosion), thermiques et mécaniques subies pendant l'utilisation en réacteur.

Parmi ces alliages, certains ont la particularité de renfermer des quantités significatives de Nb. On en trouve une description notamment dans le document US-A-4 649 023, où ils sont appliqués à la fabrication de tubes destinés à des réacteurs à eau légère, qu'ils soient à eau bouillante (REB) ou à eau pressurisée (REP).

D'autres documents (US-A-5 266 131) envisagent leur application à d'autres pièces réalisées à partir de feuillards. Mais jusqu'à présent, les applications industrielles de ces alliages au Nb ont été limitées à des réacteurs à eau pressurisée (REP). Les tentatives pour utiliser ces mêmes alliages dans des réacteurs à eau bouillante (REB) n'ont pas été concluantes, car leur comportement en corrosion généralisée ou en corrosion nodulaire n'était pas satisfaisant. On utilise donc habituellement dans les REB d'autres types d'alliages de Zr.

On a proposé dans le document JP-A-62 182 258 de réaliser des composants pour assemblages de combustible, notamment pour REB, en un alliage Zr-Nb-Sn-Fe-O obtenu par laminage à chaud, puis trempe β ou (α + β), suivie d'un écrouissage d'au moins 30%, puis d'un vieillissement à une température supérieure à la température de recristallisation (450-550°C par exemple), sans laminage à froid ultérieur. Il en résulte une structure comportant de fins précipités de βNb et des intermétalliques ZrFe₂. On vise ainsi à obtenir des pièces peu sensibles à la corrosion nodulaire et à ténacité et ductilité élevées.

On a aussi récemment proposé (document WO-A-2006/004499) d'utiliser dans un REB des alliages contenant du Nb pour réaliser des composants à partir de tôles. Aucun élément d'alliage ne doit y être présent à raison de plus de 1,6%. Les traitements thermomécaniques effectués sur l'alliage conduisent à la transformation en particules de βNb, contenant au moins 90% de Nb, de sensiblement toutes les particules de phases secondaires. De préférence, la teneur en Fe de l'alliage est de 0,3 à 0,6% en poids, et à part Zr, Nb et Fe l'alliage ne contient significativement que Sn. La teneur d'aucun autre élément d'alliage ne doit excéder 500ppm. Ces alliages visent à l'obtention d'une bonne résistance aux types classiques de corrosion et au grandissement sous irradiation.

Toutefois, un problème fréquemment rencontré dans les REB est lié à l'apparition de ce que l'on appelle couramment la « shadow corrosion » ce que l'on peut traduire par « corrosion en ombres portées ».

Il s'agit d'un type de corrosion qui survient lorsque deux pièces en matériaux de natures différentes sont en couplage galvanique (transfert d'électrons entre les deux matériaux immergés dans un milieu à conductivité électrique non nulle) en présence d'espèces oxydantes. En l'espèce, le milieu conducteur est l'eau bouillante du réacteur. Lorsque le couplage entre un composant en alliage de Zr d'une part (tel qu'un boîtier ou une gaine de combustible) et un composant en alliage à base Ni ou en acier inoxydable d'autre part (tel qu'une grille assurant l'écartement des tubes) est réalisé, on observe l'apparition d'une corrosion blanche localisée sur l'alliage de Zr, concernant des surfaces correspondant aux ombres des autres pièces en alliage base Ni ou acier inox. Ce phénomène est amplifié par l'irradiation qui modifie les caractéristiques physicochimiques des matériaux et crée des espèces oxydantes au niveau des surfaces des composants par radiolyse du fluide caloporteur, en plus de celles créées par l'oxygène dissous dans l'eau bouillante du réacteur. Cette quantité d'oxygène dissous est nettement supérieure à celle présente dans l'eau sous pression des réacteurs REP. Les assemblages de combustible REB sont très sensibles à ce type de corrosion, et les solutions développées jusqu'ici pour réduire ou éliminer cette corrosion localisée consistent, par exemple, à revêtir l'un des composants en présence, pour le rendre électrochimiquement compatible avec l'autre (voir le document US-A-2006/0045232).

Le document EP-A-1 308 966 décrit des alliages Zr-Nb-O-Si pouvant également contenir Sn, Fe, Cr, ainsi que leurs traitements thermomécaniques visant à procurer une résistance élevée à la corrosion en général. Toutefois le cas très particulier de la shadow corrosion dans un REB n'est pas abordé dans ce document, et des moyens particuliers pour y apporter une solution n'y sont pas cités.

Le but de l'invention est de proposer des composants en alliage de Zr pour assemblages de combustible REB qui soient aussi peu que possible affectés par le phénomène de shadow corrosion, tout en ayant des propriétés satisfaisantes en utilisation, tant en termes de caractéristiques mécaniques qu'en termes de résistance aux types classiques de corrosion.

A cet effet l'invention a pour objet un alliage de zirconium résistant à la corrosion en ombres portées pour composant d'assemblage de combustible pour réacteur nucléaire à eau bouillante selon la revendication 1

Il peut subir lors de sa fabrication un ou plusieurs laminages à froid, situés avant ou entre, ou avant et entre le ou lesdits traitements thermiques effectués à une température comprise entre 450 et 610°C de durée totale d'au moins 4h.

Il peut se trouver à l'état partiellement ou totalement recristallisé.

Il peut se trouver à l'état détendu.

L'invention a également pour objet un composant d'assemblage de combustible pour réacteur nucléaire à eau bouillante, caractérisé en ce qu'il est réalisé en un alliage du type précédent.

L'invention a également pour objet un assemblage de combustible pour réacteur nucléaire à eau bouillante, caractérisé en ce qu'il comporte des composants du type précédent, et en ce que au moins certains de ces composants sont placés en condition de couplage galvanique avec d'autres composants en alliage à base Ni ou en acier inoxydable.

L'invention a également pour objet une utilisation d'un assemblage de combustible du type précédent dans un réacteur nucléaire à eau bouillante dont le fluide primaire renferme jusqu'à 400 parties par milliard d'oxygène dissous.

Le fluide primaire peut renfermer également jusqu'à 50 ml/kg d'hydrogène dissous.

Le fluide primaire peut renfermer également jusqu'à 50 parties par milliard de zinc.

Le fluide primaire peut renfermer également des espèces chimiques ajoutées pour réduire le potentiel de corrosion des matériaux en contact avec lui.

Comme on l'aura compris, l'invention concerne un alliage de Zr pour composant d'assemblage de combustible REB renfermant des quantités significatives de Nb et Sn et également un peu de Fe. Des quantités limitées de Cr, Ni, V, S et O peuvent aussi être présentes.

Une condition nécessaire est que ces alliages aient subi un ou plusieurs traitements thermiques effectués entre 450 et 610°C, pendant une durée totale d'au moins 4h, afin d'être assuré d'avoir décomposé la phase de βZr, résultant des traitements thermiques antérieurs, en phase de βNb. Aucun traitement thermique postérieur à la déformation à chaud ne doit être conduit à plus de 610°C. En effet, si un tel traitement était réalisé, on recréerait une phase de βZr, ce qui dégraderait le comportement de l'alliage en corrosion.

Un ou des laminages à froid peuvent être exécutés avant, et/ou entre, et/ou après ce ou ces traitement(s) thermique(s). En particulier ces traitements thermiques entre 450 et 610°C peuvent être des recuits intermédiaires séparant des passes de laminage à froid. Au moins l'un de ces laminages à froid doit être effectué avec un taux de réduction d'au moins 25%.

Cette suite de traitement(s) thermique(s) et de laminage(s) doit être suivie d'un traitement thermique final dont la durée peut aller de 1 minute à 20 heures, à une température minimale de 450°C et à une température de 610°C au maximum. En effet, l'expérience montre que l'exécution du ou des traitement(s) thermique(s) long(s) précédent(s), même d'une durée totale de 10 à 100 heures, ne permet pas d'atteindre l'équilibre de composition des phases précipitées de βNb et Zr(Nb,Fe)₂. Effectuer, pendant ou après ce(s) traitement(s) long(s) au moins un laminage à froid suffisant (taux de réduction ≥ 25%), ainsi qu'un traitement thermique final (tel que, par exemple mais non limitativement, un recuit de détente ou de recristallisation) permet d'atteindre cet équilibre ou de s'en rapprocher suffisamment, en conservant des temps de traitement raisonnables.

C'est dans ces conditions que les inconvénients habituels de l'utilisation d'alliages au Nb dans les REB peuvent être surmontés, et également qu'on peut tirer parti de l'absence de shadow corrosion que procurent ces alliages lorsque les pièces qu'ils composent sont dans des conditions de couplage galvanique avec des pièces en alliage à base Ni ou en acier inoxydable qui se trouvent dans leur environnement proche.

On peut considérer qu'il y a un risque de couplage galvanique dans un réacteur dès lors qu'un composant en alliage de Zr se trouve en situation d'échange d'électrons avec un autre composant en alliage base Ni ou en acier inoxydable dans un milieu à conductivité non nulle, et lorsque le milieu (le fluide primaire) qui les environne renferme jusqu'à 400 parties par milliard d'oxygène dissous, voire également jusqu'à 50 ml par kg d'hydrogène dissous et/ou jusqu'à 50 parties par milliard de zinc, avec ajout éventuel de métaux nobles, de méthanol, ou de toute autre espèce chimique dans le but de réduire le potentiel de corrosion des matériaux en contact avec le fluide primaire du réacteur. Cela peut être réalisé généralement lorsque les composants sont séparés d'une distance inférieure à 20mm.

Bien entendu, on peut utiliser ces alliages pour réaliser également des composants d'assemblage de combustible REB qui ne seraient pas dans des conditions de couplage galvanique, si leurs propriétés les rendent bien adaptés à cet usage.

L'invention sera mieux comprise à l'aide de la description qui suit, donnée en référence aux figures annexées :
- la figure 1 montre l'influence de Sn sur l'oxydation de tubes en alliage de Zr à 1% de Nb et 0,1 % de Fe en eau lithiée à 360°C ;
- la figure 2 montre une micrographie d'un alliage selon l'invention, avec des précipités typiques de cet alliage.

La shadow corrosion constatée sur les composants d'assemblages de combustible REB est due, comme on l'a dit, à un phénomène de couplage galvanique assisté par l'irradiation, intervenant dans un milieu oxygéné. L'effet propre de l'irradiation est difficile à reproduire en laboratoire, mais il est connu que l'irradiation accélère les phénomènes constatés. On peut plus aisément évaluer les effets de l'oxygène et du couplage galvanique dans des essais de laboratoire, et c'est ce qui a été fait selon le protocole suivant.

Des échantillons d'alliages selon l'invention et d'échantillons de référence sont introduits dans un autoclave sous des conditions oxydantes. Pour chaque alliage, deux échantillons sont testés, l'un couplé à un feuillard d'INCONEL® (alliage à base Ni), l'autre non couplé. Une teneur en oxygène dissous de 100ppm est maintenue dans le milieu, ainsi qu'une teneur en bore de 0,12% sous forme d'acide borique et une teneur en lithium de 2ppm sous forme de lithine. On vise ainsi à obtenir un milieu agressif et à haut potentiel en oxygène, dont les effets sur des échantillons en situation de couplage galvanique sont comparables à ceux résultant d'un séjour en REB.

La sensibilité d'un alliage à la shadow corrosion s'exprime à l'aide du rapport entre les épaisseurs d'oxydes formées sur l'échantillon couplé et sur l'échantillon non couplé. Plus ce rapport est élevé, plus l'alliage est sensible au couplage, et donc à la shadow corrosion. On considère qu'un rapport supérieur à 2,5 traduit une sensibilité élevée de l'alliage à la shadow corrosion, qui le rend inadapté à son utilisation en réacteur dans des conditions de couplage galvanique.

Différents essais ont été conduits, dont les résultats sont reportés dans les tableaux et figures qui suivent.

L'influence de l'étain sur l'oxydation de tubes en un alliage à 1% de Nb et 0,1% de Fe à 360°C dans de l'eau lithiée à 70ppm de Li a été évaluée sur des échantillons dont les compositions sont exposées dans le tableau 1.

**Tableau 1 : Composition des échantillons montrant l'influence de Sn**

| | Références | | Invention | | | |
|---|---|---|---|---|---|---|
| | A | B | C | D | E | F |
| Sn (%) | 0.0039 | 0.19 | 0.48 | 0.63 | 0.89 | 1.08 |
| Fe (%) | 0.09 | 0.09 | 0.085 | 0.1 | 0.09 | 0.09 |
| Nb (%) | 1.1 | 1.05 | 1.05 | 1.05 | 1.11 | 1.08 |
| O (ppm) | 1390 | 1430 | 1450 | 1390 | 1460 | 1550 |
| C (ppm) | 18 | 14 | 13 | 23 | 21 | 23 |
| N (ppm) | 14 | 26 | 28 | 55 | 16 | 21 |
| Al (ppm) | 20 | 21 | 19 | 19 | 21 | 21 |
| Cr (ppm) | 33 | 32 | 35 | 33 | 34 | 36 |
| Hf (ppm) | 47 | 47 | 49 | 45 | 49 | 49 |
| S (ppm) | 12 | 15 | 18 | 26 | 15 | 12 |
| Si (ppm) | < 10 | | | | | |

Tous ces échantillons ont subi la suite de traitements suivante :
- fusion du lingot ;
- forgeage dans le domaine β sous forme de barres ;
- forgeage des barres en billettes de ∅200mm dans le domaine α ;
- trempe dans l'eau froide à partir de 1050°C ;
- perçage des billettes ;
- filage après préchauffage à 600°C ;
- 4 passes de laminage à froid sur un laminoir à pas de pèlerin, avec un taux de laminage à chaque passe compris entre 55% et 83%, séparées par des recuits intermédiaires de 2 h à 575°C, et un traitement thermique final de 2 heures à 560-590°C, pour obtenir le tube final de diamètre 9,75mm et d'épaisseur de paroi 0,57mm.

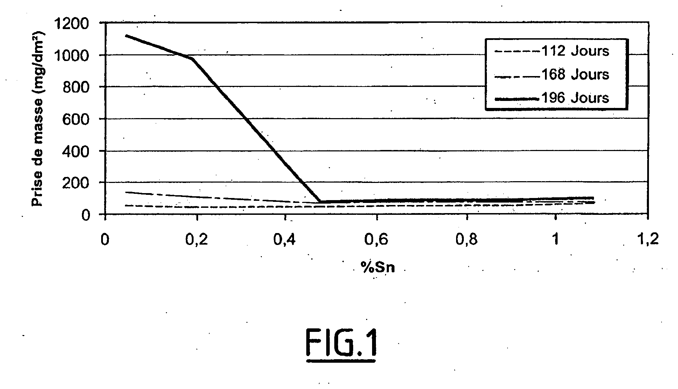

La figure 1 montre la prise de poids des tubes A à F après 112, 168 et 196 jours dans le milieu considéré, sans couplage galvanique. On voit que les échantillons de référence A et B à 0,039% et 0,19% ont une résistance à la corrosion en eau lithiée qui commence à se dégrader entre 112 et 168 jours, et devient franchement médiocre entre 168 et 196 jours. Dans les mêmes périodes, les échantillons selon l'invention C à F demeurent stables en corrosion. Il est donc nécessaire d'imposer aux alliages de l'invention une teneur en Sn d'au moins 0,25%, pour que les zones non soumises à la shadow corrosion aient un bon comportement en corrosion.

La sensibilité à la shadow corrosion a été testée sur les échantillons dont les compositions et les modes d'élaboration sont exposés dans le tableau 2. Ces échantillons ont subi un recuit de recristallisation en fin de traitement.

**Tableau 2 : Compositions, traitements et performances des échantillons recristallisés testés en shadow corrosion.**

| | G | H | I | J | K | L | M | N | O | P | Q |
|---|---|---|---|---|---|---|---|---|---|---|---|
| Nb (%) | 1.11 | 1 | 1 | 1 | 1 | 1 | 1 | 1 | 3 | 1 | 1 |
| Fe (%) | 0.014 | 0.04 | 0.16 | 0.16 | 0.35 | 0.098 | 0.104 | 0.19 | 0.06 | 0.1 | 0.35 |
| Sn (%) | 0.51 | 0.5 | 0.5 | 0.5 | 0.5 | 0.48 | 0.29 | 0.285 | 1 | 1 | 1.3 |
| O (ppm) | 1367 | 1491 | 1367 | 1367 | 1422 | 1470 | 1400 | 1380 | 1200 | 1300 | 1055 |
| S (ppm) | 27 | 31 | 23 | 23 | 33 | 20 | 24 | 22 | 31 | <5 | < 5 |
| C (ppm) | 29 | 38 | 29 | 29 | 29 | 37 | 44 | 37 | 110 | 100 | 66 |
| Si (ppm) | < 10 | < 10 | < 10 | < 10 | < 10 | < 10 | < 10 | < 10 | 104 | <100 | 70 |
| Al (ppm) | 28 | | | | | 19 | 21 | 21 | <30 | <30 | 25 |
| Cr (ppm) | 21 | | | | | 53 | 53 | 55 | <100 | <100 | 46 |
| N (ppm) | 20-23 | | | | | 23 | 27 | 28 | 23 | <30 | 16 |
| Composant | Tubes | | | | | | | | Feuillard | Tube | |
| Gamme | Fusion du lingot | | | | | | | | | | |
| | Forgeage beta | | | | | | | | | | |
| | Forgeage alpha | | | | | | | | Trempe béta | Forgeage alpha | |
| | Trempe béta, perçage des billettes | | | | | | | | Laminage à chaud 770-790°C | Trempe béta, perçage des billettes | |
| | Filage à 600°C | | | | | | | | Recuit 560-590°C 1h | Filage à 600°C | |
| | 4 passes de laminage à froid (LAF), avec un taux de laminage à chaque passe compris entre 55 et 83%, recuits intermédiaires 2h à 560-590°C | | | | | | | | 4 Cycles de LAF (taux entre 30 et 45%), recuits intermédiaires 560-590°C 1h | 5 cycles de LAF (taux entre 42 et 83%) et recuits intermédiaires 2h à 560-590°C | |
| | Recuit final 2h 560-590°C | | | | | | | | Recuit final 560-590°C 7 min | Recuit final 2h à 560-590°C | |
| Sensibilité à la shadow corrosion | 3.5 | 4 | 2.25 | 2.5 | 1.5 | 1.6 | 1.9 | 1.75 | 1.14 | 2 | 1.2 |

Les exemples G, H, K, O, P, Q ne sont pas conformes à l'invention.

Parmi les laminages à froid de ces exemples, les derniers d'entre eux ont été effectués à des taux d'au moins 25%.

Ces essais montrent que, de façon surprenante, dans les alliages Zr-Nb-Sn-Fe à Nb ≥ 0,4% et Sn ≥ 0,2%, abaisser la teneur en Fe à des valeurs aussi basses que 0,1%, voire 0,06%, ne conduit pas à des alliages ayant une sensibilité particulière à la shadow corrosion. Ce n'est qu'en dessous de Fe = 0,05% (échantillons G et H) que la sensibilité à la shadow corrosion devient trop élevée (c'est-à-dire supérieure à 2,5, selon le critère défini plus haut).

On pense pouvoir attribuer cet effet favorable à la formation de précipités intermétalliques Zr(Nb, Fe)₂, ou d'autres intermétalliques contenant du Nb et des éléments parmi Fe, Cr, Ni et/ou V, par opposition aux précipités de βNb qui ne contiennent pas ces éléments. Les traitements thermomécaniques effectués selon l'invention permettent d'obtenir des précipités d'équilibre contenant du Nb, en nombre suffisant de manière fiable.

En même temps, la présence de précipités de βNb, et non de βZr, permet de conserver une bonne résistance à la corrosion uniforme.

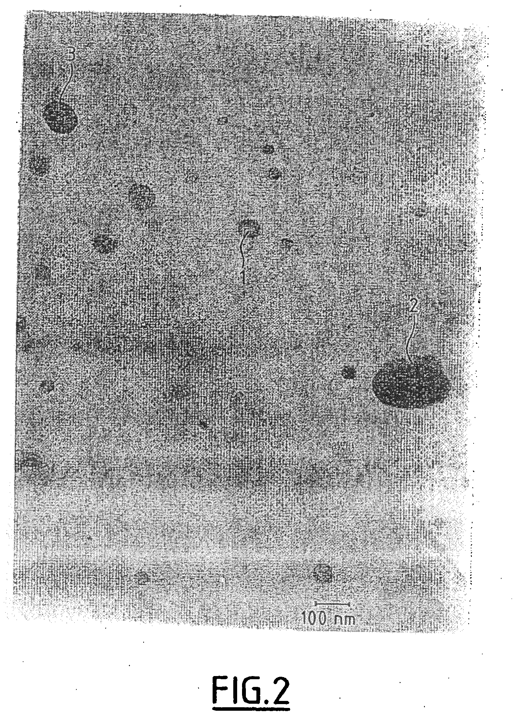

La figure 2 montre une micrographie réalisée à fort grandissement au microscope électronique à transmission d'un alliage selon l'invention, à savoir l'échantillon L du tableau 2. On y remarque la présence de précipités 1 de βNb et également des composés intermétalliques Zr(Nb, Fe)₂ (2, 3) typiques de l'invention.

La présence de Fe va également dans le sens favorable, pour les alliages à environ 3% de Nb et 1% de Sn, d'une recristallisation plus facile, donc d'une meilleure capacité pour l'alliage à être transformé.

On a également vérifié que l'oxygène, à des teneurs de 600 à 1800ppm, et le soufre à des teneurs de 10 à 400ppm, n'avaient pas d'effet sur la résistance à la corrosion et la sensibilité au couplage galvanique. Ils peuvent être ajoutés, de façon classique, comme exposé dans les documents FR-A-2 219 978 pour l'oxygène et EP-A-0 802 264 pour le soufre, dans le but d'affiner les propriétés mécaniques de l'alliage, telles que la tenue au fluage.

Sn n'a, apparemment, pas d'effet marqué sur la sensibilité à la shadow corrosion. Sa teneur devra donc être choisie dans le but d'obtenir un compromis entre la résistance à la corrosion uniforme et à la corrosion nodulaire qu'il tend à dégrader (mais pas la corrosion en milieu lithié), et les propriétés mécaniques qu'il tend à améliorer. Ce compromis varie en fonction des applications. De manière générale, on maintient la teneur en Sn entre 0,25 et 1,7%.

Il faut également tenir compte des difficultés de transformation qui peuvent apparaître avec certains alliages.

Ainsi, on ne peut dépasser Fe = 0,32% car, sinon, des précipités de trop forte taille seraient présents.

De plus, la teneur en Nb, si elle est trop élevée (supérieure à 4,5%), tend à durcir l'alliage et à ralentir la recristallisation, d'autant plus que la teneur en Fe est élevée et que, donc, les précipités contenant à la fois Fe et Nb sont plus nombreux et tendent à ancrer les dislocations et les joints de grains.

Cr, V et Ni, qui conduisent à des précipités analogues à ceux formés par Fe et peuvent se substituer à lui, doivent, de ce point de vue, également être pris en compte.

On a constaté qu'en dessous d'une teneur en Nb = 9 x [0,4 - (Fe + Cr + V + Ni)], les alliages selon l'invention ne présentent pas de difficultés de transformation particulières, y compris pour la recristallisation.

Mais si la teneur en Nb est inférieure à 0,4%, la résistance à la corrosion nodulaire à 500°C devient insuffisante.

On choisira donc la teneur en Nb entre 0,8 et 3,6%, et en lui faisant également satisfaire la relation Nb ≤ 9 x [0,4 - (Fe + Cr + V + Ni)].

On a également réalisé des essais de sensibilité à la shadow corrosion sur des tubes d'alliages à l'état détendu. Leur composition, les traitements qu'ils ont subis et les résultats de sensibilité à la shadow corrosion figurent dans le tableau 3.

**Tableau 3 : compositions, traitements et performances des échantillons détendus testés en shadow corrosion.**

| | R | S | T | U | V | W |
|---|---|---|---|---|---|---|
| Nb (%) | 1.09 | 1 | 1.07 | 1.10 | 0.97 | 0.98 |
| Fe (%) | 0.095 | 0.35 | 0.093 | 0.097 | 0.198 | 0.097 |
| Sn (%) | 0.48 | 0.48 | 0.19 | 0.30 | 0.29 | <30ppm |
| O (ppm) | 1550 | 1420 | 1468 | 1496 | 1390 | 1440 |
| S (ppm) | 22 | 23 | 18 | 21 | 20 | 17 |
| C (ppm) | 37 | 32 | 39 | 38 | 44 | 32 |
| Si (ppm) | <10 | 11 | <10 | <10 | <10 | <10 |
| Al (ppm) | 20 | 25 | 18 | 20 | 20 | 14 |
| Cr (ppm) | 21 | 21 | 33 | 33 | 55 | 53 |
| N (ppm) | 20-23 | 20-23 | 30 | 30 | 28 | 23 |
| Composant | Tubes | | | | | |
| Gamme | Fusion du lingot | | | | | |
| | Forgeage beta | | | | | |
| | Forgeage alpha | | | | | |
| | Perçage des billettes | | | | | |
| | Filage à 600°C | | | | | |
| | 4 cycles de laminage à froid, à des taux compris entre 55 et 83%, et recuits 2h à 575°C | | | | | |
| Sensibilité à la shadow corrosion | 1.3 | 1.2 | 1.3 | 1.3 | 1.3 | 1.5 |

Les exemples S, T, W ne sont pas conformes à l'invention.

Le recuit de 2h à 575°C exécuté après le dernier laminage à froid constitue le recuit final au sens de l'invention.

L'échantillon W n'est pas conforme à l'invention, en ce qu'il ne contient pas de Sn. Mais il permet de vérifier que Sn n'a pas d'effet marqué sur la shadow corrosion, du moins en combinaison avec les autres éléments présents aux teneurs préconisées.

On voit que pour des compositions comparables à celles des échantillons recristallisés, la sensibilité à la shadow corrosion des échantillons détendus est même encore plus faible. L'invention est donc compatible avec les deux états, et par conséquent avec les états intermédiaires partiellement recristallisés.

Les excellentes performances des composants d'assemblages de combustible REB selon l'invention rendent possible leur utilisation dans des conditions où la shadow corrosion est susceptible d'être particulièrement élevée, par exemple lorsque des métaux nobles et/ou du fer et/ou de l'hydrogène sont dissous en forte quantité dans l'eau du réacteur.

## Revendications

1. Alliage de zirconium résistant à la corrosion en ombres portées pour composant d'assemblage de combustible pour réacteur nucléaire à eau bouillante , **caractérisé en ce que** sa composition est, en pourcentages pondéraux :
- Nb = 0,8 - 3,6%
- Sn = 0,25-1,7%
- Fe = 0,05 - 0,32%
- Fe + Cr + Ni + V = 0,05 - 0,32% avec Nb ≤ 9 x [0,4 - (Fe+Cr+Ni+V)]
- S = 10 - 35ppm
- C = traces - 100ppm
- Si = traces - 30ppm
- O = 600 - 1800ppm
le reste étant du Zr et des impuretés résultant de l'élaboration ;
- **en ce que**, lors de sa fabrication, postérieurement à sa dernière déformation à chaud, il a subi un ou plusieurs traitements thermiques à une température comprise entre 450 et 610°C pendant une durée totale d'au moins 4 h, et au moins un laminage à froid avec un taux de laminage d'au moins 25%, aucun traitement thermique postérieur à la déformation à chaud ne devant dépasser 610°C,
- et **en ce qu'**un traitement thermique final est effectué à une température comprise entre 450 et 610°C, pendant une durée comprise entre 1 minute et 20 heures.

2. Alliage selon la revendication 1, **caractérisé en ce qu'**il a subi lors de sa fabrication un ou plusieurs laminages à froid, situés avant ou entre, ou avant et entre le ou lesdits traitements thermiques effectués à une température comprise entre 450 et 610°C de durée totale d'au moins 4h.

3. Alliage selon la revendication 1 ou 2, **caractérisé en ce qu'**il se trouve à l'état partiellement ou totalement recristallisé.

4. Alliage selon la revendication 1 ou 2, **caractérisé en ce qu'**il se trouve à l'état détendu.

5. Composant d'assemblage de combustible pour réacteur nucléaire à eau bouillante, **caractérisé en ce qu'**il est réalisé en un alliage selon l'une des revendications 1 à 4.

6. Assemblage de combustible pour réacteur nucléaire à eau bouillante, **caractérisé en ce qu'**il comporte des composants selon la revendication 5, et **en ce que** au moins certains de ces composants sont susceptibles d'être placés en condition de couplage galvanique avec d'autres composants en alliage à base Ni ou en acier inoxydable.

7. Utilisation d'un assemblage de combustible selon la revendication 6 dans un réacteur nucléaire à eau bouillante dont le fluide primaire renferme jusqu'à 400 parties par milliard d'oxygène dissous.

8. Utilisation selon la revendication 7, **caractérisée en ce que** le fluide primaire renferme également jusqu'à 50 ml/kg d'hydrogène dissous.

9. Utilisation selon la revendication 7 ou 8, **caractérisée en ce que** le fluide primaire renferme également jusqu'à 50 parties par milliard de zinc.

10. Utilisation selon l'une des revendications 7 à 9, **caractérisée en ce que** le fluide primaire renferme également des espèces chimiques ajoutées pour réduire le potentiel de corrosion des matériaux en contact avec lui.

## Patentansprüche

1. Zirkoniumlegierung, welche gegen Schlagschatten-Korrosion beständig ist, für eine Komponente eines Brennelements für einen nuklearen Siedewasserreaktor, **dadurch gekennzeichnet, dass**:
- ihre Zusammensetzung in Gewichtsprozent ist:
• Nb = 0,8 - 3,6 %
• Sn = 0,25 - 1,7 %
• Fe = 0,05 - 0,32 %
• Fe + Cr + Ni + V = 0,05 - 0,32 % mit Nb ≤ 9 x [0,4 - (Fe+Cr+Ni+V)]
• S = 10 - 35 ppm
• C = Spuren - 100 ppm
• Si = Spuren - 30 ppm
• O = 600 - 1800 ppm
wobei der Rest Zr und Verunreinigungen sind, welche aus der Erstellung resultieren,
- dass sie bei ihrer Herstellung nach ihrer letzten Warmverformung einer oder mehreren Wärmebehandlungen bei einer Temperatur, welche zwischen 450 und 610 °C liegt, über eine Gesamtdauer von zumindest 4 h und zumindest einem Kaltwalzen mit einem Walzgrad von zumindest 25 % unterzogen wird, wobei keine Wärmebehandlung nach der Warmverformung 610 °C überschreitet,
- und dass eine finale Wärmebehandlung bei einer Temperatur, welche zwischen 450 und 610 °C liegt, über eine Dauer durchgeführt wird, welche zwischen 1 Minute und 20 Stunden liegt.

2. Legierung gemäß Anspruch 1, **dadurch gekennzeichnet, dass** sie bei ihrer Herstellung einer oder mehreren Kaltwalzvorgängen unterzogen wird, welche sich vor oder zwischen oder vor und zwischen der oder den besagten Wärmebehandlungen befinden, die bei einer Temperatur, die zwischen 450 und 610 °C liegt, mit einer Gesamtdauer von zumindest 4 h durchgeführt werden.

3. Legierung gemäß einem der Ansprüche 1 oder 2,
**dadurch gekennzeichnet, dass** sie sich in einem Zustand der partiellen oder der vollständigen Rekristallisation befindet.

4. Legierung gemäß einem der Ansprüche 1 oder 2,
**dadurch gekennzeichnet, dass** sie sich in einem Spannungsarm-Zustand befindet.

5. Brennelementkomponente für einen nuklearen Siedewasserreaktor, **dadurch gekennzeichnet, dass** sie aus einer Legierung gemäß einem der Ansprüche 1 bis 4 realisiert ist.

6. Brennelement für einen nuklearen Siedewasserreaktor,
**dadurch gekennzeichnet, dass** es Komponenten gemäß Anspruch 5 aufweist und dass zumindest bestimmte dieser Komponenten geeignet sind, sich in einen Zustand der galvanischen Kopplung mit anderen Komponenten einer Ni-Basislegierung oder eines rostfreien Stahls zu befinden.

7. Verwendung eines Brennelements gemäß Anspruch 6 in einem nuklearen Siedewasserreaktor, von welchem das Primärfluid bis zu 400 Teile pro Milliarde gelösten Sauerstoff enthält.

8. Verwendung gemäß Anspruch 7, **dadurch gekennzeichnet, dass** das Primärfluid ebenfalls bis zu 50 ml/kg gelösten Wasserstoff enthält.

9. Verwendung gemäß Anspruch 7 oder 8, **dadurch gekennzeichnet, dass** das Primärfluid ebenfalls bis zu 50 Teile pro Milliarde Zink enthält.

10. Verwendung gemäß einem der Ansprüche 7 bis 9,
**dadurch gekennzeichnet, dass** das Primärfluid ebenfalls chemische Additiv-Arten zum Reduzieren des Korrosionspotentials der Materialien enthält, welche sich mit ihm in Kontakt befinden.

## Claims

1. A zirconium alloy that is resistant to shadow corrosion for a boiling water nuclear reactor fuel assembly component, the alloy being **characterized in that**:
· its composition in percentages by weight is as follows:
· Nb = 0.8% - 3.6%
· Sn = 0.25% - 1.7%
· Fe = 0.05% - 0.32%
· Fe + Cr + Ni + V = 0.05% - 0.32% with Nb ≤ 9 × [0.4 - (Fe + Cr + Ni +V)]
· S = 10 ppm - 35 ppm
· C = traces - 100 ppm
· Si = traces - 30 ppm
· 0 = 600 ppm - 1800 ppm
· the balance being Zr and impurities from processing;
• **in that**, during fabrication, after its last hot deformation, it is subjected to one or more heat treatments at a temperature lying in the range 450°C to 610°C for a total duration of at least 4 h, with at least one cold rolling operation with a rolling ratio of at least 25%, no heat treatment subsequent to the hot deformation exceeding 610°C; and
• **in that** a final heat treatment operation is performed at a temperature lying in the range 450°C to 610°C for a duration lying in the range 1 minute to 20 hours.
2

2. An alloy according to claim 1, **characterized in that** it is subjected during fabrication to one or more cold rolling operations situated before or between or before and between said heat treatment operation(s) performed at a temperature lying in the range 450°C to 610°C for a total duration of at least 4 h.

3. An alloy according to any one of claims 1 or 2, **characterized in that** it is in the partially or completely recrystallized state.

4. An alloy according to any one of claims 1 or 2, **characterized in that** it is in the stress-relieved state.

5. A component for a boiling water nuclear reactor fuel assembly, **characterized in that** it is made of an alloy according to any one of claims 1 to 4.

6. A boiling water nuclear reactor fuel assembly, **characterized in that** it includes components according to claim 5, and **in that** at least some of said components may be placed in galvanic coupling conditions with other components made of alloy based on Ni or of stainless steel.

7. The use of a fuel assembly according to claim 6 in a boiling water nuclear reactor in which the primary fluid contains up to 400 parts per billion of dissolved oxygen.

8. A use according to claim 7, **characterized in that** the primary fluid also contains up to 50 mL/kg of dissolved hydrogen.

9. A use according to claim 7 or claim 8, **characterized in that** the primary fluid also contains up to 50 parts per billion of zinc.

10. A use according to any one of claims 7 to 9, **characterized in that** the primary fluid also contains chemical species added for reducing the corrosion potential of materials in contact therewith.
